# EUROPÄISCHE PATENTSCHRIFT

(11) **EP 0 361 343 B1**
(45) Veröffentlichungstag und Bekanntmachung des Hinweises auf die Patenterteilung: **30.11.1994**
(21) Anmeldenummer: 89117626.5
(22) Anmeldetag: 23.09.1989
(51) Int. Cl.: B60R 19/36, F16F 7/12

(54) **Stossfänger für Kraftfahrzeuge, insbesondere Personenkraftwagen**
Bumpers for motor vehicles, in particular passenger ones
Pare-chocs pour véhicules automobiles, en particulier pour voitures

(30) Priorität: 29.09.1988 DE 3833048
(43) Veröffentlichungstag der Anmeldung: 04.04.1990
(73) Patentinhaber: Bayerische Motoren Werke Aktiengesellschaft, 80788 München (DE)
(72) Erfinder: Schönleber, Gerhard, D-8000 München 40 (DE)

(56) Entgegenhaltungen:
- DE-A- 2 509 351
- DE-A- 3 626 150
- GB-A- 2 020 780
- GB-A- 2 134 211
- GB-A- 2 152 181
- US-A- 3 428 150
- US-A- 3 608 677
- PATENT ABSTRACTS OF JAPAN, Band 11, Nr. 191 (M-600)[2638], 19. Juni 1987;& JP-A-62 17 438

## Beschreibung

Die Erfindung betrifft einen Stoßfänger für Kraftfahrzeuge, insbesondere Personenkraftwagen, nach dem Oberbegriff des Patentanspruchs 1.

Bei einem aus der DE-A-2 509 351 bekannten Stoßfänger dieser Art sind als nachgiebige Befestigungsmittel elastomere Kunststoffteile vorgesehen, die hutförmig ausgebildet sind. Jedes dieser Kunststoffteile weist ein sich zwischen dem Fahrzeugaufbau und der Stoßstange erstreckendes elastisch verformbares Rohr mit in Fahr-zeuglängsrichtung verlaufender Achse auf, dessen Wandung sich in dem ersten Abstandsbereich unter axialer Belastung ausbeult und bei Entlastung federnd in die ursprüngliche Rohrform zurückstreckt. Innerhalb dieses Kunststoffrohres ist mit radialem Abstand von diesem ein sich ebenfalls in Fahrzeuglängsrichtung erstreckendes Prallrohr angeordnet, das annähernd so lang wie das Kunststoffrohr ist und an dem an einem seiner Enden eine Tragplatte befestigt ist, die durch eine Schraube, die durch die Stirnwand des Kunststoffteils hindurchragt, an dem Fahrzeugaufbau gehalten ist. Das andere, freie Ende des Prallrohres liegt bei in axialer Richtung nicht belastetem Kunststoffrohr innerhalb einer Öffnung eines Führungsringes, der an der als Hohlkörper ausgebildeten Stoßstange befestigt ist und das Prallrohr mit radialem Spiel umschließt. Zwischen dem freien Ende des Prallrohres und einer Anschlagfläche der Stoßstange ist dabei in Fahrzeuglängsrichtung ein Abstand vorhanden, der annähernd so groß wie der Federweg des Kunststoffrohres ist. Das Prallrohr kann große Kräfte, die quer zu der Fahrzeuglängsrichtung gerichtet sind, aufnehmen, so daß das Fahrzeug im wesentlichen ohne Querbelastung des Kunststoffrohres an der Stoßstange angehoben werden kann, beispielsweise beim Aufbocken. Bei Abstandsänderungen in dem ersten Abstandsbereich federt das Kunststoffrohr elastisch ein und aus. Dabei wird der das Prallrohr umgebende Führungsring auf dem Prallrohr in axialer Richtung hin und her bewegt. Wenn der Abstand der Stoßstange von dem Fahrzeugaufbau über den Federweg des Kunststoffrohres hinaus verringert wird, legt sich die Anschlagfläche der Stoßstange gegen das freie Ende des Prallrohres und dieses verkürzt sich unter plastischer Verformung in dem zweiten Abstandsbereich, wobei die Rohrwandung geknautscht wird und etwa die Form eines Wellrohres annimmt, dessen Wellen aneinander anliegen können. Die bleibende Knautschung des Prallrohres verhindert wegen der damit verbundenen Durchmesservergrößerung, daß sich bei Entlastung der Führungsring von dem Fahrzeugaufbau weg über das Prallrohr schiebt, und das plastisch verformte Prallrohr hält damit das Kunststoffrohr in der Einfederungslage. Stoßbelastungen, die keine Abstandsänderungen über den zweiten Abstandsbereich hinaus verursachen, werden von dem Stoßfänger aufgenommen; der Fahrzeugaufbau bleibt unbeeinflußt.

Bei einem aus der DE-A-2 441 557 (Fig. 6, 8) bekannten Stoßfänger sind als nachgiebige Befestigungsmittel hydraulische Stoßdämpfer vorgesehen. Das an dem Fahrzeugaufbau befestigte Zylindergehäuse jedes Stoßdämpfers bildet ein Prallrohr, das bei über das Zusammenfedern in dem ersten, von dem Fahrzeugaufbau weiter entfernten Abstandsbereich hinausgehendem weiterem Zusammenschieben von Zylindergehäuse und Kolbenstange in dem zweiten, dem Fahrzeugaufbau näher benachbarten Abstandsbereich von der Kolbenstange mittels eines an der Kolbenstange vorhandenen Ansatzes aufspreizbar ist. Damit das Zylindergehäuse beim Eindrücken des Ansatzes in definierter Weise aufreißt, kann das Zylindergehäuse mit Längskerben versehen sein. Die sich bei dem Aufspreizen bildenden Streifen der Zylindergehäusewandung werden von dem Ansatz an der Kolbenstange in radialer Richtung nach außen abgelenkt und rollen sich ähnlich wie Metallspäne bei einem Zerspanungsvorgang spiralförmig auf, so daß sich das Zylindergehäuse von seinem stoßstangenseitigen Ende aus strahlenförmig auflöst. Der Ort des Aufspreizens verlagert sich in Längsrichtung des Zylindergehäuses und das Aufspreizen erfolgt an dem jeweiligen, momentan gegebenen Ende des sich dem Fortschreiten des Aufspreizens entsprechend verkürzenden Zylindergehäuses. Die Länge, über die hinweg das Aufspreizen erfolgt, ist von dem Ausmaß der einwirkenden kinetischen Energie und der baulichen Auslegung des Stoßfängers und dessen Anordnung an dem Fahrzeugaufbau abhängig, der den aufbauseitigen Bereich des Zylindergehäuses haltend umgreift und einem Aufspreizen dieses Bereichs des Zylindergehäuses entgegenwirkt. Auch dieser Stoßfänger kann bei einem Aufprall die kinetische Energie bis zu einem ersten Schwellenwert, beispielsweise einer Aufprallgeschwindigkeit von 8 km/h, elastisch aufnehmen und sich nach einem Aufprall selbsttätig wieder regenerieren. Bei höheren Aufprallgeschwindigkeiten kann der Stoßfänger die kinetische Energie nicht mehr nur elastisch, sondern bis zu einem zweiten Schwellenwert, beispielsweise einer Aufprallgeschwindigkeit von 15 km/h, nur unter Zerstörung der Prallrohre, die plastisch verformt werden, aufnehmen.

Bei Aufprallgeschwindigkeiten bis zu dem zweiten Schwellenwert wird der durch den Stoßfänger geschützte Fahrzeugaufbau demgemäß nicht beschädigt.

Aus der GB-A-2020780 ist es bekannt, ein Prallrohr aus wenigstens einem Faserverbundwerkstoff herzustellen. Bei diesem bekannten Prallrohr können die Faserverbundwerkstoff-Fasern mit unterschiedlichen Neigungen zu der Rohrachse angeordnet sein. Bei ausreichend starker Belastung wird das Rohrwandungsmaterial an einem Rohrende in Querrichtung abgelenkt und demgemäß die Rohrwandung rohrendseitig zerstört. Diesem Zerstören wirken die Faserverbundwerkstoff-Fasern entgegen, die etwa in Umfangsrichtung verlaufen, da sie als Stütze für das Beibehalten der Rohrwandung wirken.

Der Erfindung liegt die Aufgabe zugrunde, einen Stoßfänger der eingangs genannten Art zu schaffen, der geringe Abmessungen, insbesondere eine geringe Ausladung in Fahrtrichtung, und ein geringes Gewicht aufweisen und außerdem nach einer in dem zweiten Abstandsbereich erfolgten Zerstörung der Prallelemente mit geringem Aufwand funktionsgerecht wieder hergestellt werden kann.

Die Lösung dieser Aufgabe ist in dem kennzeichnenden Teil des Patentanspruchs 1 angegeben. Durch sie wird mit einfachen Mitteln unter Einsatz preiswerter Bauteile eine wirksame Energieabsorption erreicht. Der erfindungsgemäße Stoßfänger ermöglicht eine freizügige Auslegung, insbesondere auch eine solche seiner Komponenten, und ist bei der Herstellung des Kraftfahrzeugs leicht zu montieren und reparaturfreundlich. Er beansprucht wenig Bauraum und kann unterschiedlichen Anforderungen durch Einsatz entsprechend ausgebildeter Bauteile leicht angepaßt werden. Er ist zudem wenig störanfällig und seine Prallrohre sind nicht korrosionsgefährdet.

Die Prallrohre können in einfacher Weise preiswert hergestellt werden. Besonders günstig ist es, die Prallrohre durch Ablängen stranggezogener Rohrprofile herzustellen.

Besonders vorteilhaft ist es, als nachgiebige Befestigungsmittel Federelemente einzusetzen, die im wesentlichen Ringform aufweisen und ebenfalls aus wenigstens einem Faserverbundwerkstoff bestehen. Derartige in Querrichtung belastete Federelemente, die bei geringer Belastung regenerierbart elastisch und bei stärkerer Belastung ebenso wie die Prallrohre im wesentlichen nicht regenerierbar unter Zerstörung als Prallelemente wirksam werden, sind aus der DE-OS 36 26 150 bekannt. Durch die Parallelanordnung der Federelemente und der Prallrohre ergibt sich eine besonders günstige Energieabsorption.

Bei Anordnung eines Prallrohres oder mehrerer Prallrohre in einem Federelement ergibt sich eine kompakte Bauweise.

Aus der EP-PS 55 364 ist es zwar bekannt, ein Aufprallschutzbauteil für die Abstützung einer Kraftfahrzeug-Stoßstange als Rohr aus mindestens einem Faserverbundwerkstoff herzustellen. Die Rohrwandung ist jedoch als Netzwerk ausgebildet. Das Rohr dient bei geringen Druckbelastungen in Rohrlängsrichtung einer elastischen (reversiblen) Abstützung und nimmt bei größeren Belastungen unter bleibender Verformung irreversibel Energie auf, dient also sowohl dem nachgiebigen Abstützen als auch als Prallrohr.

In der Zeichnung sind Ausführungsbeispiele der Erfindung schematisch dargestellt, und zwar zeigt
- Fig. 1: einen Teil eines Personenkraftwagens mit teilweise weggeschnittenen Teilen,
- Fig. 2: einen Stoßfänger in einem senkrechten Schnitt durch eine Stoßfänger-Befestigungsanordnung,
- Fig. 3: einen Schnitt nach der Linie III-III der Fig. 2,
- Fig. 4: einen anderen Stoßfänger ebenfalls in einem senkrechten Schnitt durch eine Stoßfänger-Befestigungsanordnung,
- Fig. 5: einen Schnitt nach der Linie V-V der Fig. 4,
- Fig. 6: einen Horizontalschnitt durch einen Teil eines weiteren Stoßfängers und
- Fig. 7, 8 und 9: unterschiedliche Prallrohr-Ablenkeinrichtungen im Schnitt.

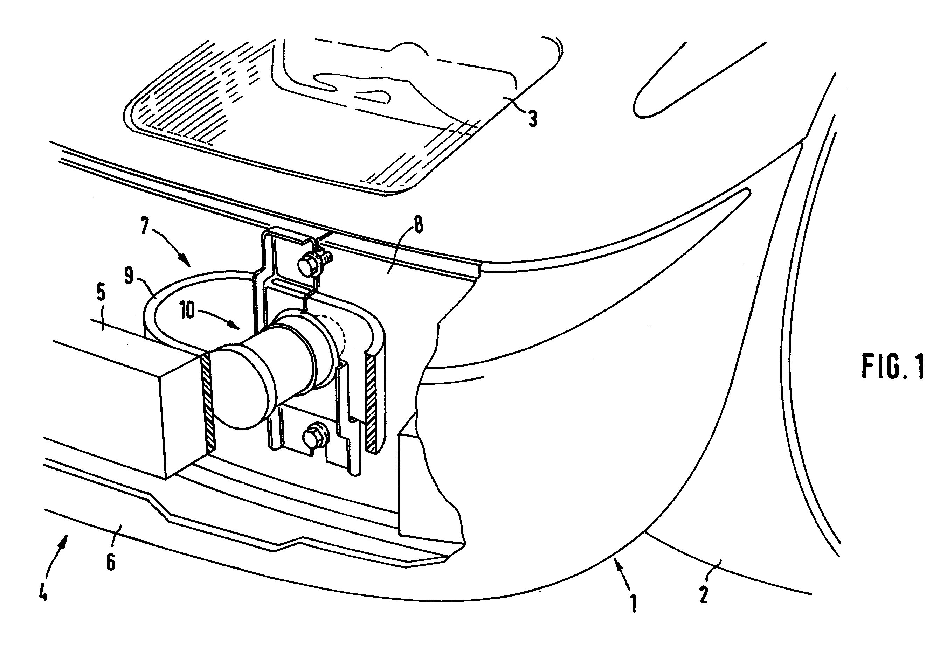

Nach Fig. 1 weist ein sportlicher zweisitziger Personenkraftwagen 1 mit einem linken Vorderrad 2 und einem linken Scheinwerfer 3 an seinem vorderen Ende einen nur teilweise dargestellten vorderen Stoßfänger 4 mit einer sich im wesentlichen quer zur Fahrzeuglängsrichtung erstreckenden horizontalen Stoßstange 5 auf, die mit einer Stoßstangenverkleidung 6 versehen ist. Die Stoßstange 5 ist mit einer linken und einer rechten Stoßstangenhalterung 7, von denen nur die linke dargestellt ist, an dem Fahrzeugaufbau 8 befestigt. Die Stoßstangenhalterung 7 wird von einem Federelement 9 gebildet, das als im wesentlichen ovaler Ring mit senkrechter Achse gestaltet ist und aus faserverstärktem Kunststoff besteht. Dieses Federelement 9 ist einerseits an der Stoßstange 5 und andererseits an dem Fahrzeugaufbau 8, beispielsweise einem Fahrzeuglängsträger, befestigt. Es dient nicht nur dazu, Stöße bis zu dem ersten Schwellenwert, also einer Aufprallgeschwindigkeit von beispielsweise 8 km/h, elastisch nachgiebig aufzufangen, sondern auch dem Halten der Stoßstange 5.

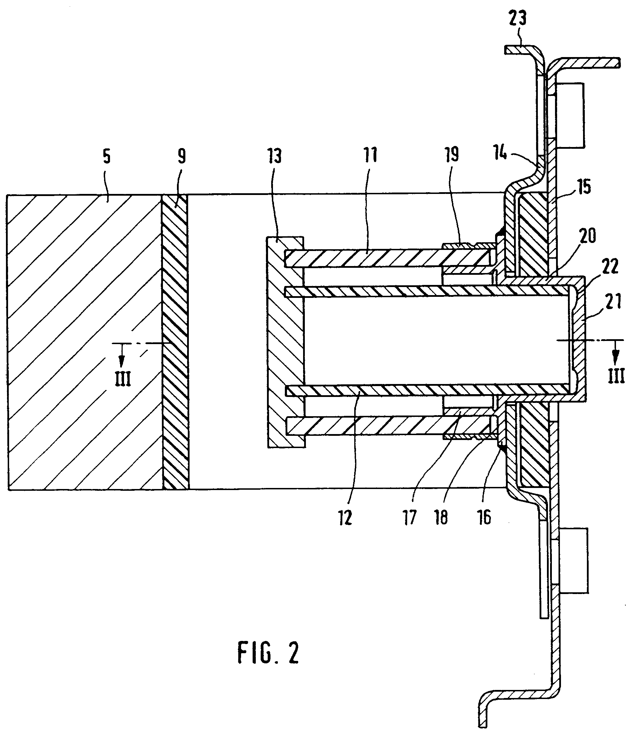

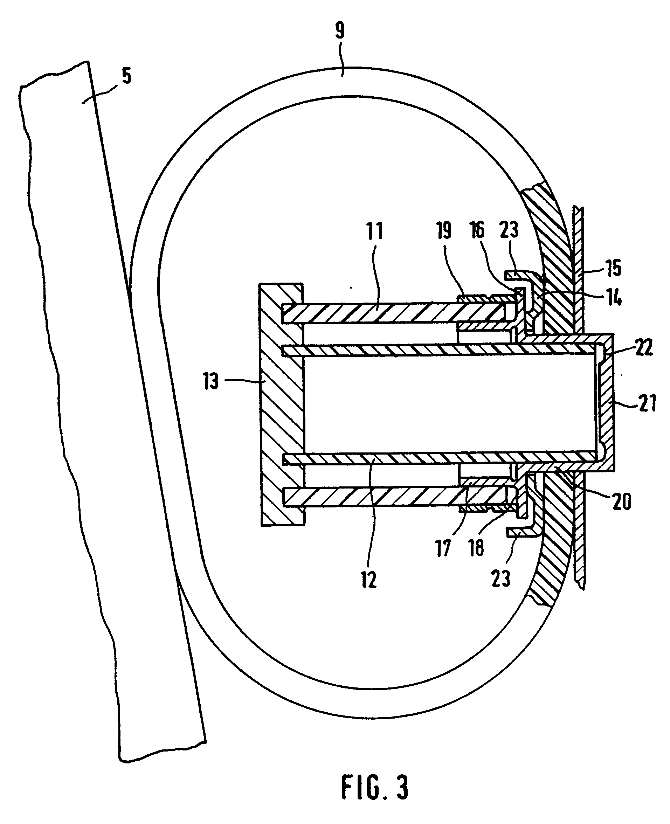

Sowohl in senkrechter als auch in waagerechter Richtung zumindest annähernd mittig in dem Federelement 9 ist eine Prallrohreinrichtung 10 angeordnet. Diese weist ein äußeres Prallrohr 11 und ein inneres Prallrohr 12 auf (Fig. 2, 3). Diese sind als Rundrohre gestaltet und koaxial zueinander mit radialem Abstand voneinander derart angeordnet, daß sich ihre Längsachse zumindest annähernd in Fahrzeuglängsrichtung und damit in Fahrtrichtung erstreckt. Die Prallrohre 11, 12, die jeweils in der erforderlichen Länge von einem stranggezogenen Rohrstrang abgeteilt worden sind, bestehen aus wenigstens einem Faserverbundwerkstoff mit zumindest im wesentlichen in Rohrlängsrichtung ausgerichteten Fasern. In Umfangsrichtung verlaufende Fasern sind in den Prallrohr-Rohrwandungen nicht vorhanden. Als Fasern können beispielsweise Glasfasern, Kohlenstoffasern oder Aramidfasern verwendet werden. Als Matrixwerkstoff, in den die Fasern eingelagert sind, kann z.B. wenigstens ein Werkstoff aus der Gruppe der Epoxydharze, Polyesterharze, Phenolharze oder Vinylesterharze oder ein thermoplastischer Werkstoff verwendet werden. Das äußere Prallrohr 11 weist eine größere Wandstärke als das innere Prallrohr 12 auf. Die Prallrohre 11, 12 sind derart bemessen, daß ihre Knicklänge nicht erreicht ist. Die in Fahrtrichtung vorderen Enden der Prallrohre 11, 12 sind bündig zueinander mit Abstand von dem stoßstangenseitigen Teil des Federelements 9 angeordnet. Mit diesen Enden greifen die Prallrohre 11, 12 in axiale Ringnuten einer von den Prallrohren 11, 12 getragenen Prallplatte 13 ein.

Mit ihren in Fahrtrichtung hinteren Enden sind die Prallrohre 11, 12 an einem Halteelement 14 gehalten, das eine im wesentlichen senkrechte Längserstreckung aufweist, den fahrzeugaufbauseitigen Teil des Federelements 9 von vorne umgreift und mit Hilfe zweier Schrauben, von denen jeweils eine oberhalb bzw. unterhalb des Federelements 9 angeordnet ist, an dem vorderen Ende eines der Längsträger 15 des Fahrzeugaufbaus 8 befestigt ist. Das Halteelement 14 weist eine sich im wesentlichen in radialer Richtung erstreckende kreisringförmige äußere Ablenkplatte 16 und einen nach vorne weisenden Haltering 17 auf. Die Vorderseite der äußeren Ablenkplatte 16 bildet eine äußere Ablenkfläche 18 mit gerundetem allmählichem Übergang zu der Außenseite des Halterings 17 in ihrem radial inneren Bereich. Der Haltering 17 wird von dem hinteren Ende des auf den Haltering 17 aufgeschobenen äußeren Prallrohres 11 umschlossen, dessen Stirnseite einen derartigen Abstand von der äußeren Ablenkplatte 16 aufweist, daß das hintere Ende des Halterings 17, in dem dessen Außendurchmesser wegen des allmählichen Übergangs zu der Ablenkplatte 16 auf diese zu zunimmt, von dem äußeren Prallrohr 11 nicht erfaßt ist. Das hintere Ende des äußeren Prallrohres 11 wird von einem Stützring 19 umfaßt, der mit über den Umfang verteilt angeordneten in Umfangsrichtung schmalen Stützfüßen an der Ablenkfläche 18 anliegt.

Das Halteelement 14 ragt mit einem napfförmigen Ansatz durch eine Öffnung in dem fahrzeugaufbauseitigen Teil des Federelements 9 hindurch und in das vordere Ende des Längsträgers 15 hinein. Die Stirnwand des Ansatzes 20 bildet eine innere Ablenkplatte 21. In dieser ist an ihrer Vorderseite eine umlaufende Axialnut vorgesehen, die eine innere Ablenkfläche 22 bildet, die in ihrem radial äußeren Bereich eine Rundung aufweist, die mit allmählichem Übergang sowohl an die zylindrische Wandung des Ansatzes 20 als auch an einen zumindest annähernd ebenen stirnseitigen Bereich der inneren Ablenkfläche 22 anschließt. An diesen schließt sich radial weiter innen eine weitere Rundung mit allmählichem Übergang an, die an dem zentralen Bereich der inneren Ablenkplatte 21 in Fahrtrichtung nach vorne weisend ausläuft. Die zylindrische Wandung des Ansatzes 20 umschließt das hintere Ende des in den Ansatz 20 eingeschobenen inneren Prallrohres 12, dessen Stirnseite einen derartigen Abstand von der inneren Ablenkplatte 21 aufweist, daß die innere Ablenkfläche 22 von dem inneren Prallrohr 12 nicht erfaßt ist.

Die Prallrohre 11, 12 können allein durch Preßsitz auf dem Haltering 17 bzw. in dem Ansatz 20 gehalten sein. Ihre Lage kann jedoch auch durch zusätzliche Mittel fixiert sein. Beispielsweise kann eine Klebebindung vorgesehen sein.

Der Rand des Halteelements 14 ist an den beiden senkrechten Längsseiten und an der oberen Seite um 90° nach vorne umgebogen, so daß ein nach vorne ragender Bund 23 gebildet ist. Dieser ragt an den beiden Seiten des Halteelements 14 mit seitlichem Abstand über die äußere Ablenkplatte 16 hinaus nach vorne.

Bei einem Aufprall verformen sich zunächst die Stoßstange 5 und die die Stoßstange 5 tragenden Federelemente 9 elastisch. Bei niedrigen Aufprallgeschwindigkeiten bis zu dem ersten Schwellenwert von beispielsweise 8 km/h verbleibt es bei dieser elastischen Verformung und deren Rückbildung.

Bei höheren Aufprallgeschwindigkeiten, die zwischen dem ersten Schwellenwert von beispielsweise 8 km/h und dem zweiten Schwellenwert von z.B. 15 km/h liegen, legt sich nach Ausschöpfung des Verformungsweges für die rein elastische Verformung die Innenseite des stoßstangenseitigen Teils des Federelements 9 gegen die Prallplatte 13 und verschiebt diese auf den Fahrzeugaufbau 8 zu. Dabei werden das äußere Prallrohr 11 auf die äußere Ablenkplatte 16 und das innere Prallrohr 12 auf die innere Ablenkplatte 21 zu verschoben. Beim Auflaufen auf die äußere Ablenkfläche 18 wird das äußere Prallrohr 11 nach außen aufgeweitet, und zwar wegen des auf den Fahrzeugaufbau 8 zu größer werdenden Durchmessers mit zunehmender Verschiebung in verstärktem Maße. Die in radialer Richtung wirkenden Kräfte führen zu einer Zerstörung des äußeren Prallrohres 11. Dessen Fasern werden voneinander getrennt und aus der im wesentlichen axialen Ausrichtung in eine im wesentlichen radiale Ausrichtung radial nach außen unter dem Stützring 19 hindurch abgelenkt, der verhindert, daß das äußere Prallrohr 11 über den Ablenkbereich hinaus von der äußeren Ablenkplatte 16 aus aufreißt. In den beiden seitlichen Bereichen stoßen die nach außen abgelenkten Fasern auf den Bund 23, an dem sie erneut abgelenkt werden. Die Wandung des inneren Prallrohres 12 wird von der inneren Ablenkfläche 22 radial nach innen und anschließend in axialer Richtung in den von dem inneren Prallrohr 12 umschlossenen Raum abgelenkt.

Bei der Ablenkung der Wandungen der Prallrohre 11, 12 wird die Lage der Fasern zueinander verändert. Bei dem äußeren Prallrohr 11 werden die Fasern voneinander getrennt. Bei dem inneren Prallrohr 12 werden die Fasern gegeneinander gedrängt. Neben dieser Lageänderung ergeben sich Faserbrüche. Bei den durch die Formänderung hervorgerufenen Delaminationen und Faserbrüchen wird kinetische Energie umgewandelt und damit der Aufprall aufgefangen. In entsprechender Weise treten gleichzeitig in den Federelementen 9 Delaminationen, Zwischenfaserrisse und Faserbrüche auf, so daß auch die Federelemente 9 bei einem derartigen Aufprall zerstört werden und als Prallelemente wirken. Während einer derartigen Zerstörung der Prallrohre 11, 12 und der Federelemente 9 ist die auf die Längsträger 15 des Fahrzeugaufbaus 8 ausgeübte Kraft annähernd konstant.

Nach einem derartigen Aufprall, bei dem der Fahrzeugaufbau 8 nicht beschädigt wurde, können die Prallrohre und die Federelemente in einfacher Weise ausgebaut und durch neue Bauteile ersetzt werden, so daß das Fahrzeug wieder in einen fahrfertigen Zustand versetzt ist.

Falls bei einem Aufprall, bei dem die kinetische Energie nicht mehr durch elastische Verformung und die Zerstörung der Federelemente 9 und der Prallrohre 11, 12 aufgefangen werden kann, die Prallplatte 13 auf den Haltering 17 stößt, knicken dessen Stützfüße an einer an seinem unteren Rand vorgesehen Sollbruchstelle ab. Der Stützring 19 kann durch die Prallplatte 13 ebenfall zusammengedrückt werden. Dadurch wird erreicht, daß auch der letzte Rest des äußeren Prallrohres 11 verformt werden und zur Umwandlung der kinetischen Energie beitragen kann. Das innere Prallrohr 12 ist derart bemessen, daß bei einer derart starken Annäherung der Prallplatte 13 an das Halteelement 14 der von dem inneren Prallrohr 12 auf der verbliebenen Länge umschlossene Raum völlig von der abgelenkten Wandung des inneren Prallrohres 12 ausgefüllt ist. Bei weiterem Druck treten mangels einer Ausweichmöglichkeit dieses Rohrwandungsmaterials in diesem unter weiterer Umwandlung kinetischer Energie zusätzlich Faserbrüche auf. Dabei steigt die auf die Längsträger 15 ausgeübte Kraft derart an, daß auch der Fahrzeugaufbau 8 beschädigt wird.

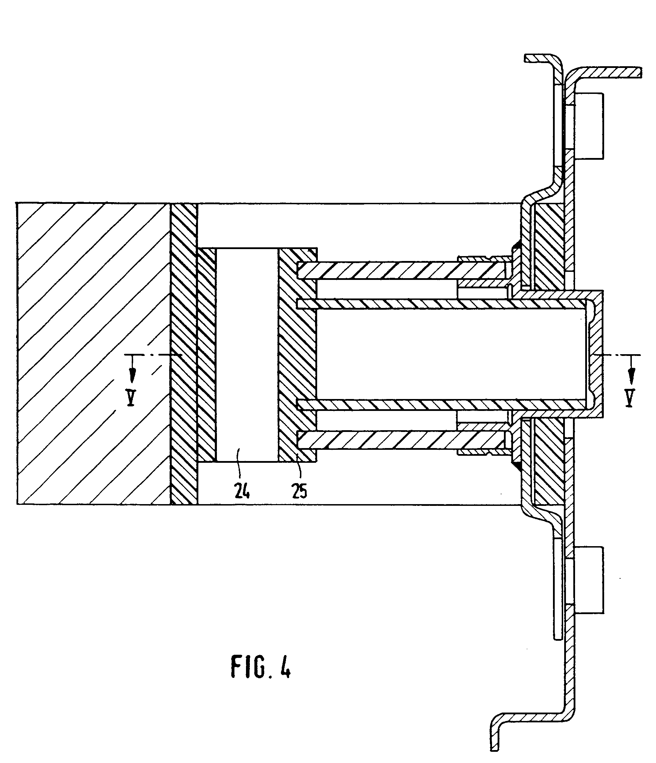

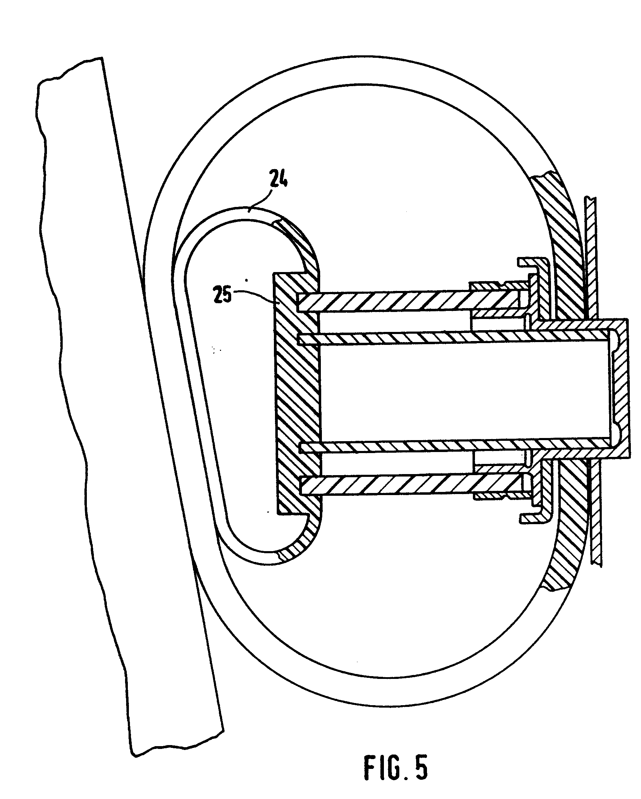

Das Ausführungsbeispiel nach Fig. 4, 5 unterscheidet sich von dem nach Fig. 1 bis 3 dadurch, daß ein Spannelement 24 aus gummielastischem Werkstoff zwischen dem stoßstangenseitigen Teil des Federelements 9 und den Prallrohren 11, 12 vorgesehen ist. Das Spannelement 24 ist im wesentlichen als ovaler Ring mit aufrecht verlaufender Achse gestaltet und weist eine Prallplatte 25 auf, die in axialen Nuten die vorderen Enden der Prallrohre 11, 12 aufnimmt. Das Spannelement 24 übt eine Haltekraft in Richtung auf die Ablenkplatten auf die Halterohre 11, 12 aus. Diese werden dadurch in ihrer Bereitschaftsstellung für eine Ablenkung gehalten. Bei einem Aufprall, der nicht nur elastisch aufgenommen werden kann, wird durch das Spannelement 24 erreicht, daß die Prallrohre 11, 12 nicht mit einem harten Stoß, sondern mit allmählich ansteigender Kraft durch den stoßstangenseitigen Teil des Federelements 9 belastet werden.

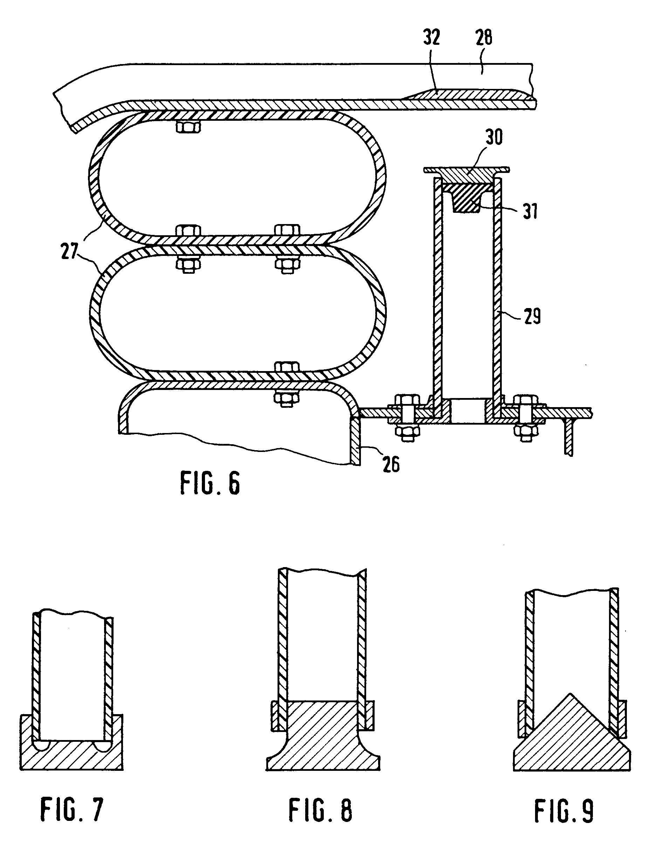

Nach Fig. 6 sind an der Vorderseite eines Längsträgers 26 eines nicht weiter dargestellten Fahrzeugaufbaus eines Personenkraftwagens zwei einander gleiche Federelemente 27 aus glasfaserverstärktem Kunststoff, die jeweils im wesentlichen als ovaler Ring mit aufrecht verlaufender Achse ausgebildet sind, in Reihenschaltung angeordnet. Das aufbauseitige Federelement 27 ist mit dem Längsträger 26 verbunden. Das andere Federelement 27, das an dem aufbauseitigen Federelement 27 befestigt ist, ist mit einer Stoßstange 28 verbunden. Neben den beiden Federelementen 27 ist ein Prallrohr 29 angeordnet, dessen Achse sich im wesentlichen in Fahrzeuglängsrichtung und damit in Fahrtrichtung erstreckt, und dessen Aufbau dem der Prallrohre 11, 12 der Ausführungsbeispiele nach Fig. 1 bis 5 entspricht. Das Prallrohr 29 besteht demgemäß ebenfalls aus glasfaserverstärktem Kunststoff, dessen Fasern jedoch nicht wie bei den Federelementen 27 in Umfangsrichtung, sondern zumindest im wesentlichen in Rohrlängsrichtung angeordnet sind. Das aufbauseitige Ende des Prallrohres 29 ist an dem Längsträger 26 eingespannt. Das andere Ende des Prallrohres 29 ist mit Abstand von der Stoßstange 28 in deren Bewegungsbahn angeordnet. An dem stoßstangenseitigen Ende trägt das Prallrohr 29 eine Ablenkplatte 30, die mit einem kurzen zylindrischen Ansatz in das Prallrohr 29 hineinragt und mit diesem verklebt ist. Die Ablenkplatte 30 weist eine gerundete Ablenkfläche auf, die sich von dem zylindrischen Ansatz bis zu einer sich in radialer Richtung erstreckenden ebenen Bundfläche erstreckt. Der Außendurchmesser der Ablenkplatte 30 ist größer als der Außendurchmesser des Prallrohres 29. Innerhalb des Prallrohres 29 trägt die Ablenkplatte 30 an dem zylindrischen Ansatz einen aufvulkanisierten Gummipuffer 31. Ein nicht dargestellter Stützring umschließt das Prallrohr 29 an dessen stoßstangenseitigem Endbereich. Die Stoßstange 28 ist an der dem Prallrohr 29 gegenüberliegenden Aufprallstelle mit einer Aussteifung 32 versehen.

Bei einem Aufprall, der zu einer Verlagerung der Stoßstange 28 führt, die das für die elastische Einfederung vorgesehene Maß übersteigt, trifft die Stoßstange 28 auf die Ablenkplatte 30 und drückt diese in das Prallrohr 29 hinein. Dabei wird die Rohrwandung radial nach außen abgelenkt. Bei der derart bewirkten Aufspreizung des Prallrohres 29 und der gleichzeitig erfolgenden Zerstörung der Federelemente 27 wird kinetische Energie umgewandelt und dadurch der Fahrzeugaufbau bis zu Aufprallgeschwindigkeiten, die den zweiten Schwellenwert nicht übersteigen, vor Beschädigungen geschützt. Der Stützring verhindert, daß das Prallrohr 29 über den Ablenkbereich hinaus in axialer Richtung aufreißt.

Die Anordnung eines Prallrohres neben den Federelementen oder anderen nachgiebigen Befestigungsmitteln ermöglicht eine weitgehend freizügige Anordnung und Dimensionierung des Prallrohres. Beispielsweise ist bei einer derartigen Anordnung die Länge des Prallrohres nicht an die Abmessungen des Federelements gebunden.

Die Ablenkung der Wandung eines Prallrohres beeinflußt das Ausmaß der Energieumwandlung. Diese kann daher nicht nur durch die Gestaltung des Prallrohres, sondern auch durch die Ausbildung der Ablenkfläche beeinflußt werden.

Nach Fig. 7 ist eine Ablenkung einer Rohrwandung nach innen längs einer Bahn mit gleichbleibender Krümmung, also längs eines Teils einer Kreisbahn vorgesehen. Die Ablenkung erfolgt dabei bis zu einer erneuten Aus richtung der Rohrwandung in annähernd axialer Richtung.

Nach Fig. 8 ist eine Ablenkung nach außen ebenfalls längs einer Bahn mit gleichbleibender Krümmung, also längs eines Teils einer Kreisbahn vorgesehen. Die Ablenkung erfolgt nicht bis zur völligen Ausrichtung der abgelenkten Wandungsteile in radialer Richtung.

Nach Fig. 9 ist eine Ablenkung nach außen längs einer Schrägfläche (Kegel) vorgesehen. Eine kegelige Ablenkfläche ist auch für eine Ablenkung nach innen möglich.

Durch Wahl der Krümmung bzw. der Schrägflächenneigung läßt sich die für den jeweiligen Anwendungsfall günstige Ablenkung bestimmen.

Es ist möglich, ein einzelnes Prallrohr oder mehrere Prallrohre, beispielsweise zwei Prallrohre wie bei den Ausführungsbeispielen nach Fig. 1 bis 3 und Fig. 4, 5 oder drei oder vier Prallrohre, gemeinsam einzusetzen. Die Prallrohre können wie bei den Ausführungsbeispielen nach Fig. 1 bis 3 und Fig. 4, 5 ineinander, aber auch nebeneinander angeordnet sein.

Für eine möglichst weitgehende Energieumwandlung ist wesentlich, daß stets eine möglichst weitgehende Auflösung des Faserverbundes und eine Vielzahl von Faserbrüchen erzielt werden.

Ein erfindungsgemäßer Stoßfänger kann sowohl am vorderen oder am hinteren Fahrzeugende als auch an beiden Fahrzeugenden eingesetzt werden. Statt einer Umformung an einem der Prallrohrenden kann eine solche an beiden Prallrohrenden vorgesehen sein.

### Bezugszeichenliste

- 1: Personenkraftwagen
- 2: Vorderrad
- 3: Scheinwerfer
- 4: Stoßfänger
- 5: Stoßstange
- 6: Stoßstangenverkleidung
- 7: Stoßstangenhalterung
- 8: Fahrzeugaufbau
- 9: Federelement
- 10: Prallrohreinrichtung
- 11: Prallrohr äußeres
- 12: Prallrohr inneres
- 13: Prallplatte
- 14: Halteelement
- 15: Längsträger
- 16: Ablenkplatte äußere
- 17: Haltering
- 18: Ablenkfläche äußere
- 19: Stützring
- 20: Ansatz
- 21: Ablenkplatte innere
- 22: Ablenkfläche innere
- 23: Bund
- 24: Spannelement
- 25: Prallplatte
- 26: Längsträger
- 27: Federelement
- 28: Stoßstange
- 29: Prallrohr
- 30: Ablenkplatte
- 31: Gummipuffer
- 32: Aussteifung

## Patentansprüche

1. Stoßfänger für Kraftfahrzeuge, insbesondere Personenkraftwagen, mit einer Stoßstange (5, 28), mit nachgiebigen Befestigungsmitteln (9, 27), durch welche die Stoßstange (5, 28) mit veränderbarem Abstand von dem Fahrzeugaufbau (8) an diesem gehalten ist und welche bei Abstandsänderungen in einem ersten Abstandsbereich im wesentlichen regenerierbar sind, und mit Prallrohren (11, 12, 29), deren Achsen sich im wesentlichen in Fahrzeuglängsrichtung erstrecken und die als von den nachgiebigen Befestigungsmitteln gesonderte Teile ausgebildet sind und bei Abstandsverringerungen in einem zweiten Abstandsbereich, der näher als der erste Abstandsbereich zu dem Fahrzeugaufbau (8) angeordnet ist, bei Druckbelastung in Rohrlängsrichtung im wesentlichen nicht regenerierbar unter Ablenkung des Rohrwandungsmaterials in Querrichtung als Stützmittel wirksam werden,
**dadurch gekennzeichnet**,
daß die Prallrohre (11, 12, 29) aus wenigstens einem Faserverbundwerkstoff bestehen, die Faserverbundwerkstoff-Fasern in Rohrlängsrichtung angeordnet sind und die Ablenkung des Rohrwandungsmaterials unter rohrendseitiger Zerstörung der Rohrwandung erfolgt.

2. Stoßfänger nach Anspruch 1, dadurch gekennzeichnet, daß die Prallrohre (11, 12, 29) aus stranggezogenen Profilen hergestellt sind.

3. Stoßfänger nach Anspruch 1 oder 2, dadurch gekennzeichnet, daß als Fasern der Prallrohre (11, 12, 29) Glasfasern, Kohlefasern oder Aramidfasern verwendet sind.

4. Stoßfänger nach Anspruch 1, 2 oder 3, dadurch gekennzeichnet, daß als Matrixwerkstoff der Prallrohre (11, 12, 29) wenigstens ein Werkstoff aus der Gruppe der Epoxydharze, Polyesterharze, Phenolharze oder Vinylesterharze verwendet ist.

5. Stoßfänger nach Anspruch 1, 2 oder 3, dadurch gekennzeichnet, daß als Matrixwerkstoff der Prallrohre (11, 12, 29) wenigstens ein thermoplastischer Werkstoff verwendet ist.

6. Stoßfänger nach einem der Ansprüche 1 bis 5, dadurch gekennzeichnet, daß zumindest an einem der Enden jedes Prallrohres (11, 12, 29) eine Ablenkplatte (16, 21, 30) angeordnet ist, die eine Ablenkfläche (18, 22) aufweist.

7. Stoßfänger nach Anspruch 6, dadurch gekennzeichnet, daß die Ablenkfläche (18, 22) gerundet ausgebildet ist.

8. Stoßfänger nach einem der Ansprüche 1 bis 7, dadurch gekennzeichnet, daß eine Ablenkung der Rohrwandung nach innen vorgesehen ist.

9. Stoßfänger nach einem der Ansprüche 1 bis 7, dadurch gekennzeichnet, daß eine Ablenkung der Rohrwandung nach außen vorgesehen ist und die Prallrohre (11) jeweils in der Nähe des Ablenkendes von einem Stützring (19) umschlossen sind.

10. Stoßfänger nach einem der Ansprüche 1 bis 9, dadurch gekennzeichnet, daß eine Rohrwandungsablenkung zumindest eines Teiles der Rohrwandung um wenigstens annähernd 180° vorgesehen ist.

11. Stoßfänger nach einem der Ansprüche 1 bis 10, dadurch gekennzeichnet, daß Prallrohre (11, 12) ineinander angeordnet sind.

12. Stoßfänger nach Anspruch 11, dadurch gekennzeichnet, daß die Prallrohre (11, 12) koaxial zueinander angeordnet sind.

13. Stoßfänger nach Anspruch 12, dadurch gekennzeichnet, daß zwischen koaxial zueinander angeordneten Prallrohren (11, 12) rundum ein Abstand in Querrichtung vorgesehen ist.

14. Stoßfänger nach Anspruch 11, 12 oder 13, dadurch gekennzeichnet, daß eine Rohrwandungsablenkung sowohl nach innen als auch nach außen vorgesehen ist.

15. Stoßfänger nach einem der Ansprüche 1 bis 14, dadurch gekennzeichnet, daß als nachgiebige Befestigungsmittel im wesentlichen ringförmig ausgebildete Federelemente (9, 27) aus faserverstärktem Kunststoff vorgesehen sind, die in Ringquerrichtung belastet und in dem ersten Abstandsbereich regenerierbar elastisch und bei Abstandsverringerungen in dem zweiten Abstandsbereich ebenfalls im wesentlichen nicht regenerierbar unter Zerstörung als Prallelemente wirksam werden.

16. Stoßfänger nach Anspruch 15, dadurch gekennzeichnet, daß wenigstens ein Prallrohr (11, 12) in einem Federelement (9) angeordnet ist.

17. Stoßfänger nach Anspruch 16, dadurch gekennzeichnet, daß das wenigstens eine Prallrohr (11, 12) durch zumindest ein elastisches Spannelement (24) in dem Federelement (9) gehalten ist.

18. Stoßfänger nach Anspruch 15, dadurch gekennzeichnet, daß die Prallrohre (29) außerhalb der Federelemente (27) neben diesen in deren Nähe angeordnet sind.

## Claims

1. A bumper for motor vehicles, especially passenger cars, comprising a bumper bar (5, 28) and resilient securing means (9, 27) which hold the bumper bar (5, 28) at a variable distance from the car body (8) and can be substantially regenerated if the changes in the distance are within a first range, and also comprising impact tubes (11, 12, 29) the axes of which extend substantially in the longitudinal direction of the vehicle, the tubes being separate parts from the flexible securing means, and when the reduction in distance occurs in a second range, which is nearer the car body (8) than the first range, and pressure is exerted in the longitudinal direction of the tubes, the tube-wall material is deflected, substantially without possibility of regeneration, in the transverse direction and acts as a bracing means,
characterised in that the impact tubes (11, 12, 29) are made of at least one fibre composite having fibres disposed in the longitudinal direction of the tubes, and the tube-wall material is deflected when the wall at the end of the tube is destroyed.

2. A bumper according to claim 1, characterised in that the impact tubes (11, 12, 29) are made from extruded and drawn section members.

3. A bumper according to claim 1 or 2, characterised in that the fibres in the impact tubes (11, 12, 29) are glass fibres, carbon fibres or aramide fibres.

4. A bumper according to claim 1, 2 or 3, characterised in that the matrix material of the impact tubes (11, 12, 29) is at least one material from the group comprising epoxy resins, polyester resins, phenolic resins or vinyl ester resins.

5. A bumper according to claim 1, 2 or 3, characterised in that the matrix material used for the impact tubes (11, 12, 29) comprises at least one thermoplastic material.

6. A bumper according to any one of claims 1 to 5, characterised in that a deflecting plate (16, 21, 30) comprising a deflecting surface (18, 22) is disposed at least one end of each impact tube (11, 12, 29).

7. A bumper according to claim 6, characterised in that the deflecting surface (18, 22) is rounded.

8. A bumper according to any one of claims 1 to 7, characterised in that the tube wall is adapted to be deflected inwards.

9. A bumper according to any one of claims 1 to 7, characterised in that the tube wall is adapted to be deflected outwards and the impact tubes (11) are each surrounded by a bracing ring (19) near the deflection end.

10. A bumper according to any one of claims 1 to 9, characterised in that at least a part of the tube wall is adapted to be deflected by at least approximately 180°.

11. A bumper according to any one of claims 1 to 10, characterised in that impact tubes (11, 12) are disposed inside one another.

12. A bumper according to claim 11, characterised in that the impact tubes (11, 12) are disposed coaxially relative to one another.

13. A bumper according to claim 12, characterised in that a distance in the transverse direction is provided all round between coaxially-disposed impact tubes (11, 12).

14. A bumper according to claim 11, 12 or 13, characterised in that a tube wall is adapted to be deflected either inwards or outwards.

15. A bumper according to any one of claims 1 to 14, characterised in that the resilient securing material substantially comprises annular spring elements (9, 27) made of reinforced plastics and loaded in the transverse direction of the ring and operating elastically and capable of regeneration in the first distance range and operative as impact elements, substantially without regeneration and with destruction, when the distance is reduced in the second distance range.

16. A bumper according to claim 15, characterised in that at least one impact tube (11, 12) is disposed in a spring element (9).

17. A bumper according to claim 16, characterised in that the at least one impact tube (11, 12) is held in the spring element (9) by at least one resilient clamping element (24).

18. A bumper according to claim 15, characterised in that the impact tubes (29) are disposed outside and near the spring elements (27).

## Revendications

1. Pare-chocs pour véhicules automobiles, en particulier voitures particulières, avec une barre de parechocs (5, 28), avec des moyens de fixation souples (9, 27), grâce auxquels la barre de choc (5, 28) est maintenue sur la carrosserie (8) du véhicule à une distance changeable de celle-ci et gui peuvent être régénérés essentiellement lors de modifications de cette distance dans une première zone d'écartement, et avec des tubes de choc (11, 12, 29) dont les axes s'étendent essentiellement dans le sens longitudinal du véhicule et qui sont réalisés comme des pièces spéciales des moyens de fixation souples et ils sont mis en action en tant que moyens d'appui, lors de raccourcissements de la distance dans une deuxième zone d'écartement, qui est située plus proche que la première zone par rapport à la carrosserie du véhicule (8), par suite d'une charge de compression dans le sens longitudinal du tube et ils ne sont pas régénérables sous l'effet d'une déviation du matériau de paroi du tube dans le sens transversal,
caractérisé en ce que,
les tubes de choc (11, 12, 29) sont composés au moins d'une matière composite renforcée par des fibres, et les fibres de cette matière composite sont disposées dans le sens longitudinal du tube et la déviation du matériau de la paroi du tube a lieu par destruction côté extrémité du tube, de la paroi du tube.

2. Pare-chocs selon la revendication 1, caractérisé en ce que les tubes de choc (11, 12, 29) sont produits en profilés par étirage mécanique.

3. Pare-chocs selon la revendication 1 ou 2, caractérisé en ce qu'on utilise comme fibres des tubes de choc (11, 12, 29) des fibres de verre, des fibres de carbone ou des fibres d'aramide.

4. Pare-chocs selon les revendications 1, 2 ou 3, caractérisé en ce que comme matière de matrice des tubes de choc (11, 12, 29) on utilise au moins une matière du groupe des résines époxy, des résines de polyester, des résines de phénol ou des résines d'ester vinylique.

5. Pare-chocs selon les revendications 1, 2 ou 3, caractérisé en ce que comme matière de matrice des tubes de choc (11, 12, 29) on utilise au moins une matière thermoplastique.

6. Pare-chocs selon une des revendications 1 à 5, caractérisé en ce qu'au moins sur une des extrémités de chaque tube de choc (11, 12, 29) est placée une plaque de déviation (16, 21, 30), qui comporte une surface de déviation (18, 22).

7. Pare-chocs selon la revendication 6, caractérisé en ce que la surface de déviation (18, 22) est réalisée arrondie.

8. Pare-chocs selon une des revendications 1 à 7, caractérisé en ce qu'une déviation de la paroi de tube est prévue-vers l'intérieur.

9. Pare-chocs selon une des revendications 1 à 7, caractérisé en ce qu'une déviation de la paroi de tube est prévue vers l'extérieur, et les tubes de choc (11) sont entourés au voisinage de l'extrémité de déviation par un anneau d'appui (19).

10. Pare-chocs selon une des revendications 1 à 9, caractérisé en ce qu'une déviation de paroi de tube d'au moins une partie de la paroi des tubes est prévue au moins approximativement de 180°

11. Pare-chocs selon une des revendications 1 à 10, caractérisé en ce que les tubes de choc (11, 12) sont disposés l'un dans l'autre.

12. Pare-chocs selon la revendication 11, caractérisé en ce que les tubes de choc (11, 12) sont disposés coaxialement l'un par rapport à l'autre.

13. Pare-chocs selon la revendication 12, caractérisé en ce qu'entre les tubes de choc (11, 12) disposés coaxialement l'un par rapport à l'autre est prévu tout autour un intervalle dans le sens transversal.

14. Pare-chocs selon les revendications 11, 12 ou 13, caractérisé en ce qu'une déviation de la paroi de tube est prévue aussi bien vers l'intérieur que vers l'extérieur.

15. Pare-chocs selon une des revendications 1 à 14, caractérisé en ce que comme moyens de fixation souples sont prévus essentiellement des éléments élastiques (9, 27) réalisés en forme d'anneaux constitués de matière renforcée de fibres, qui sont chargés dans le sens transversal de l'anneau et sont régénérables élastiquement dans la première zone d'écartement et lors de diminutions de la distance dans la deuxième zone d'écartement ils sont opérationnels également comme éléments de choc essentiellement non régénérables sous l'effet de destruction.

16. Pare-chocs selon la revendication 15, caractérisé en ce qu'au moins un tube de choc (11, 12) est disposé dans un élément élastique (9).

17. Pare-chocs selon la revendication 16, caractérisé en ce qu'au moins l'un des tubes de choc (11, 12) est maintenu par au moins un élément de tension (24) dans l'élément élastique (9).

18. Pare-chocs selon la revendication 15, caractérisé en ce que les tubes de choc (29) sont disposés en dehors des éléments élastiques (27) à côté de ceux-ci dans leur voisinage.
